# EUROPÄISCHE PATENTSCHRIFT

(11) **EP 1 033 847 B1**
(45) Veröffentlichungstag und Bekanntmachung des Hinweises auf die Patenterteilung: **05.04.2006**
(21) Anmeldenummer: 00250036.1
(22) Anmeldetag: 08.02.2000
(51) Int. Cl.: H04L 12/56, H04Q 3/66, H04Q 11/04, H04L 12/28

(54) **Verfahren zur Auswahl eines TK Netzes zur Übertragung von Informationen zwischen zwei TK-Einheiten sowie Router zur Durchführung**
Method for the choice of a telecom network for transmission of information between two telecom entities and router for implementation
Procédé pour le choix d'un réseau de télécommunication pour la transmission d'information entre deux terminaux ainsi qu'un routeur pour la mise en oeuvre

(30) Priorität: 16.02.1999 DE 19907469
(43) Veröffentlichungstag der Anmeldung: 06.09.2000
(73) Patentinhaber: Teles AG Informationstechnologien, 10587 Berlin (DE)
(72) Erfinder: Paetsch, Frank, 10961 Berlin (DE); Wegener, Rochus, 13503 Berlin (DE)
(74) Vertreter: Müller, Wolfram Hubertus

(56) Entgegenhaltungen:
- EP-A- 0 848 560
- DE-A- 19 645 368
- KUNTZE R: "MIT LCR-BOXEN PREISWERT" FUNKSCHAU, FRANZIS-VERLAG K.G. MUNCHEN, DE, Bd. 71, Nr. 8, 3. April 1998 (1998-04-03), Seiten 20-25, XP000779237 ISSN: 0016-2841

## Beschreibung

Die Erfindung betrifft ein Verfahren zur Übertragung von Informationen zwischen einer rufenden TK-Einheit und einer gerufenen TK-Einheit über ein Telekommunikationsnetz, das ein Router mit einer bestimmten Präferenz unter Berücksichtigung mindestens eines Netzparameters aus einer Mehrzahl zur Verfügung stehender Telekommunikationsnetze auswählt, und einen Router zur Durchführung des Verfahrens.

### Hintergrund der Erfindung

Telekommunikationsbezogene Dienstleistungen, insbesondere Telefondienste, werden heute von einer Vielzahl von Anbietern zur Verfügung gestellt. Jeder Anbieter besitzt dabei eine eigene Preisstruktur für Telefondienste, die jeweils von der Tageszeit und dem Ort des gerufenen Teilnehmers sowie ggf. weiteren Parametern abhängt. Dies macht es schwierig, wenn nicht unmöglich, zu einem bestimmten Zeitpunkt für einen bestimmten Ruf den kostengünstigsten Anbieter auszuwählen.

Zur Lösung dieses Problems sind sogenannte Least Cost Router bekannt, die aktualisierbare Routing-Tabellen mit Informationen zu der Preisstruktur einer Vielzahl von Telekommunikationsanbietern bzw. den zugehörigen Telekommunikationsnetzen enthalten. Eine Steuereinheit wählt für einen bestimmten Verbindungswunsch unter Auswertung der Routing-Tabellen die kostengünstigste Verbindung aus und übernimmt automatisch die Einwahl in das entsprechende Telekommunikationsnetz. Eine Übersicht zum Stand der Technik zu Least Cost Routern ist in dem Artikel "Mit LCR-Boxen preiswert telefonieren" von Roland Kuntze in der Zeitschrift "Funkschau 8/98" gegeben. DE 196 45 368 offenbart ein Verfahren und einen Router, wo mehrere Wechsel zwischen einen leitung vermilteluden Netz und einem Paketnetz während einer bestehenden Schicht 7 verbindung möglich sind.

Die bestehenden Verfahren zum Least Cost Routing und die zugehörigen Least Cost Router weisen den Nachteil auf, daß mit dem Aufbau einer Verbindung zu einem gerufenen Teilnehmer der Anbieter für die fragliche Verbindung ein für allemal festgelegt ist. Dies ist insbesondere nachteilig für den Fall, daß aus bestimmten Gründen (etwa Überlastung des Netzes) der preisgünstigste TK-Anbieter nicht ausgewählt werden konnte. Das Telefongespräch kann dann nicht mit dem preisgünstigsten Tarif erfolgen.

### Aufgabe der Erfindung

Der Erfindung liegt die Aufgabe zugrunde, ein Verfahren zur Übertragung von Daten zwischen einer rufenden TK-Einheit und einer gerufenen TK-Einheit über ein leitungsvermitteltes Telekommunikationsnetz, das ein Least Cost Router auswählt, und einen Least Cost Router zur Durchführung des Verfahrens zur Verfügung zu stellen, die ein hohes Maß an Flexibilität bei der Auswahl von leitungsvermittelnden Telekommunikationsnetzen für eine aufzubauende Verbindung ermöglichen. Insbesondere soll dem Nutzer einer TK-Einheit ermöglicht werden, stets das kostengünstigste, zur Verfügung stehende Netz zu benutzen.

### Gegenstand der Erfindung

Diese Aufgabe wird erfindungsgemäß durch ein Verfahren mit den Merkmalen des Anspruchs 1, eine Anordnung zur Durchfürhrüng des Verfahren mit den Merkmalen des Anspruchs 17 und ein Least Cost Router mit den Merkmalen des Anspruchs 11 gelöst. Bevorzugte und vorteilhafte Ausgestaltungen der Erfindungen sind in den Unteransprüchen angegeben.

Die erfindungsgemäße Lösung zeichnet sich dadurch aus, daß bei Vorliegen und während einer Verbindung über ein Telekommunikationsnetz niedriger Präferenz versucht wird, die Verbindung zu der gerufenen TK-Einheit alternativ über ein Telekommunikationsnetz höherer Präferenz herzustellen. Sofern dies möglich ist, erfolgt während der bestehenden Verbindung zur gerufenen TK-Einheit ein Wechsel des Telekommunikationsnetzes, ohne daß der Nutzer dies bemerkt. Der Wechsel des Telekommunikationsnetzes kann ggf. mehrfach erfolgen, bis die Verbindung über das Telekommunikationsnetz mit den günstigsten Parametern bzw. der höchsten Präferenz erfolgt.

Der Grund dafür, das die Verbindung nicht sogleich über das Telekommunikationsnetz höchster Präferenz hergestellt wird, kann zum einen darin liegen, daß der Verbindungsaufbau über das Telekommunikationsnetz höchster Präferenz etwa wegen Überlastung des Netzes oder technischen Problemen erfolglos war und daher auf ein anderes Netz zurückgegriffen werden mußte. Zum anderen kann der Grund darin liegen, daß sich während der Verbindung die Präferenz der Netze ändert. Beispielsweise bieten einige Anbieter während der ersten Minute einen besonders günstigen Tarif an, der sich nach Ablauf der ersten Minute jedoch erhöht. Die Präferenz des Netzes ändert sich dann während der bestehenden Verbindung.

Unter einer "Verbindung" zwischen der rufenden TK-Einheit und der gerufenen TK-Einheit wird im Rahmen dieser Erfindung eine Ebene 7-Verbindung (L7-Verbindung) gemäß dem OSI-Referenzmodell verstanden. Bei einem "Wechsel der Verbindung" oder einem "Wechsel des Telekommunikationsnetzes" wird dagegen unter "Verbindung" eine Verbindung in den Ebenen 3 oder 4 des OSI-Referenzmodells (L3-Verbindung) verstanden. Der Wechsel dieser L3-Verbindung tangiert die Ebene 7-Verbindung, d.h., die Verbindung zwischen dem rufenden und dem gerufenen Teilnehmer nicht, so daß diese auch bei einem Wechsel des Telekommunikationsnetzes ohne Unterbrechung miteinander verbunden sind.

Die erfindungsgemäße Lösung stellt ein hohes Maß an Flexibilität bei der Auswahl eines kostengünstigen Telekommunikationsanbieters bzw. -netzes zur Verfügung, da ggf. während eines Gesprächs ein Wechsel des Telekommunikationsnetzes erfolgt, um dem Nutzer eine bessere, d.h. billigere oder höherqualitative Verbindung zur Verfügung zu stellen.

In einer bevorzugten Ausgestaltung des erfindungsgemäßen Verfahrens wird nach Aufbau einer Verbindung über ein Telekommunikationsnetz mit nicht höchster Präferenz versucht, eine Verbindung über das Telekommunikationsnetz höchster Präferenz aufzubauen und während der bestehenden Verbindung auf dieses Telekommunikationsnetz zu wechseln, sofern die Verbindung über das Telekommunikationsnetz höchster Präferenz erfolgreich aufgebaut werden konnte. Es wird in dieser Variante nicht versucht, zunächst auf ein Telekommunikationsnetz zu wechseln, das zwar eine höhere Präferenz als das zur Zeit benutzte Telekommunikationsnetz aufweist, jedoch nicht die höchste Präferenz besitzt. Dies führt zu einer gewissen Vereinfachung des Verfahrens.

Für die Übertragung von Informationen zwischen der rufenden TK-Einheit und der gerufenen TK-Einheit stehen bevorzugt mindestens zwei Datenkanäle zur Verfügung. Dabei werden die Nutzinformationen (Sprache, Fax, Daten etc.) nach Aufbau der Verbindung über das Telekommunikationsnetz mit niedriger Präferenz über einen ersten Datenkanal übertragen und nach dem Wechsel auf eine Telekommunikationsnetz höhere Präferenz über einen anderen der Datenkanäle übertragen. Über jedes Telekommunikationsnetz wird ein eigener Datenkanal durchgeschaltet, so daß während der bestehenden L3-Verbindung über das Telekommunikationsnetz niedriger Präferenz ohne Störung der L7-Verbindung eine L3-Verbindung über ein Telekommunikationsnetz höherer Präferenz aufgebaut werden kann.

Sofern es sich um eine Verbindung nach dem ISDN-Standard handelt, stehen zur Datenübertragung zwischen den TK-Einheiten mindestens 2 B-Kanäle zur Verfügung und werden bei einem Wechsel auf ein anderes Telekommunikationsnetz die Daten über den jeweils anderen B-Kanal übertragen. Die Signalisierung erfolgt dabei über den Signalisierungskanal (D-Kanal) bzw. zwischen den Vermittlungsstellen z.B. auf dem Signalisierungskanal gemäß dem CCITT-Signalisierungssystem Nr. 7.

Damit die der gerufenen TK-Einheit vorgelagerte Vermittlungsstelle, der der gerufenen TK-Einheit vorgelagerte Switch oder Least Cost Router die Verbindung über das neue Telekommunikationsnetz der Verbindung über das bisherige Telekommunikationsnetz zuordnen können, werden vom Least Cost Router der rufenden TK-Einheit Signalisierungsbefehle an die Vermittlungsstelle, den Switch oder den Least Cost Router betreffend den Wechsel des Telekommunikationsnetzes gesandt.

Hierdurch wird vermieden, daß die Vermittlungsstelle, der Switch oder der Least Cost Router, die bzw. der die Verbindung zur gerufenen TK-Einheit weiterschaltet, aufgrund der bestehenden Verbindung über das bisherige Telekommunikationsnetz nicht lediglich ein "besetzt" signalisiert. Aufgrund der Signalisierung erkennt die Vermittlungsstelle; der Switch oder der Least Cost Router, daß die Verbindung nun über ein neues Telekommunikationsnetz geschaltet wird, schaltet diese Verbindung zur gerufenen TK-Einheit durch und baut die vorherige Verbindung über das Telekommunikationsnetz niedrigerer Präferenz ab.

Die Zuordnung der Verbindungen über das bisherige und das neue Telekommunikationsnetz erfolgen beispielsweise über die Absenderinformation der rufenden TK-Einheit, die die rufende TK-Einheit eindeutig identifiziert. Die Signalisierung vom Least Cost Router der rufenden TK-Einheit zu der Vermittlungsstelle, dem Switch oder dem weiteren Least Cost Router erfolgt bevorzugt als Außenband-Signalisierung, Sie kann jedoch auch als Inband-Signalisierung, etwa auf einem ISDN-B-Kanal, ausgeführt sein.

In einer bevorzugten Ausgestaltung des Verfahrens liegt zunächst eine Verbindung von der rufenden TK-Einheit zur gerufenen TK-Einheit über das Telekommunikationsnetz höchster Präferenz vor, ändert sich jedoch die Präferenz während der Verbindung, und wird daraufhin ein Verbindungsaufbau zur gerufenen TK-Einheit über ein Telekommunikationsnetz nun höherer Präferenz versucht und erfolgt ggf. ein Wechsel zum Telekommunikationsnetz nun höherer Präferenz während der bestehenden Verbindung. Diese Variante ermöglicht es insbesondere, günstige Anfangstarife etwa für die erste Minute einer Verbindung von Telekommunikationsanbieteren auszunutzen.

Bevorzugt wird nach einem Wechsel des Telekommunikationsnetzes die bisherige Verbindung über das Telekommunikationsnetz niedrigerer Präferenz abgebaut, um keine Kosten im nun nicht mehr benötigten Netz entstehen zu lassen. Dies ist allerdings nicht zwingend erforderlich. So sind Anwendungen denkbar, in denen es sinnvoll ist, einen zweiten Datenkanal über das Netz niedrigerer Präferenz beizubehalten.

Die Parameter, deren Bewertung zu der Auswahl eines Telekommunikationsnetzes mit einer bestimmten Präferenz führt, sind insbesondere die Kosten und/oder die Bandbreite einer Verbindung zur berufenen TK-Einheit, wobei in einer bevorzugten Ausgestaltung allein die Kosten als Parameter herangezogen werden.

Ein erfindungsgemäßer Least Cost Router weist Speichermittel, die Routing-Tabellen enthalten, eine Steuereinheit, die auf der Grundlage der Routing-Tabellen Telekommunikationsnetze mit einer bestimmten Präferenz auswählt und Steuerbefehle generiert, eine Signalisierungseinheit zum Verbindungsaufbau und eine Line-Switching-Einrichtung zum Durchschalten von Datenkanälen auf. Die Signalisierungseinheit versucht dabei entsprechend den Steuerbefehlen der Steuereinheit, eine Verbindung zu einer gerufenen TK-Einheit über ein Telekommunikationsnetz hoher Präferenz aufzubauen, während zu der gleichen TK-Einheit bereits eine Verbindung über ein Telekommunikationsnetz niedrigerer Präferenz besteht. Die Line-Switching-Einrichtung schaltet eine Verbindung zur gerufenen TK-Einheit stets über das Telekommunikationsnetz mit der höchsten zur Verfügung stehenden Präferenz durch. Gegebenenfalls erfolgt dabei während der bestehenden Verbindung ein Wechsel des Nutzkanals, der durchgeschaltet wird. Die vorherige Verbindung mit niedrigerer Präferenz wird dann bevorzugt abgebaut.

Bevorzugt schaltet die Line-Switching-Einrichtung die Verbindung zu einer gerufenen TK-Einheit zunächst auf einem ersten Datenkanal über ein erstes Telekommunikationsnetz und bei Vorliegen eines entsprechenden Steuerbefehls der Steuereinheit auf einem zweiten Datenkanal über ein zweites Telekommunikationsnetz höherer Präferenz durch.

Damit der Least Cost Router auch empfängerseitig eingesetzt werden kann, also der gerufenen TK-Einheit vorgeschaltet, weist die Steuereinheit und/oder die Signalisierungseinheit Zuordnungsmittel auf, die über unterschiedliche Telekommunikationsnetze zu derselben gerufenen TK-Einheit durchgeschalteter bzw. durchzuschaltende Datenkanäle derselben L7-Verbindung zuordnet. Hierdurch wird ermöglicht, eine L3-Verbindung über ein Telekommunikationsnetz höherer Präferenz einer schon bestehenden L3-Verbindung über ein Telekommunikationsnetz niedrigerer Präferenz zuzuordnen und die neue L3-Verbindung zur gerufenen TK-Einheit durchzuschalten, wobei die L7-Verbindung zwischen der rufenden und der gerufenen TK-Einheit nicht tangiert wird.

Es wird darauf hingewiesen, daß die Steuereinheit und die Signalisierungseinheit des Least Cost Routers funktionell zu verstehen sind und durch Hardware und/oder Software realisiert werden können. Dementsprechend können Sie auch als eine Einheit, etwa als Software, ausgebildet sein.

Bevorzugt ist der Least Cost Router in einen Switch eines Telekommunikationsnetzes integriert, so daß zusätzlich zu der Routing-Funktion die Durchschaltung von digitalen Nutzkanalverbindungen sowie Signalisierungsfunktionen abgewickelt werden.

Weiter liegt es im Rahmen der Erfindung, den Least Cost Router in ein TK-Endgerät, etwa ein Telefon, oder eine Telekommunikationsanlage zu integrieren.

Der erfindungsgemäße Least Cost Router kann auf verschiedene Weise angeordnet werden. In einer ersten Variante ist der Least Cost Router zwischen der rufenden TK-Einheit und einer Ortsvermittlungsstelle, die Zugang zu einer Mehrzahl von Telekommunikationsnetzen besitzt bzw. Teil dieser Netze ist, angeordnet. Die Line-Switching-Funktion reduziert sich dann in der einfachsten Ausführung auf ein Umschalten zwischen zwei Datenkanälen, insbesondere zwischen zwei B-Kanälen gemäß dem ISDN-Standard bei Verwendung einer ISDT-TK-Einheit.

Alternativ ist der Least Cost Router der der rufenden TK-Einheit zugeordneten Ortsvermittlungsstelle nachgeschaltet oder in diese integriert (bzw. einer der gerufenen TK-Einheit zugeordneten Ortsvermittlungsstelle vorgeschaltet) und Teil eines Telekommunikationsnetzes. Bei grundsätzlich gleichem Aufbau erfüllt der Least Cost Router dann bevorzugt auch Aufgaben eines Switches betreffend die Durchschaltung von digitalen Nutzkanalverbindungen und die Abwicklung von Signalisierungsfunktionen. Die Line-Switching-Einrichtung ist als Koppelfeld mit einer Vielzahl von Eingangs- und Ausgangsleitungen ausgebildet.

### Beschreibung mehrerer Ausführungsbeispiele

Die Erfindung wird nachfolgend unter Bezugnahme auf die Figuren der Zeichnung anhand mehrerer Ausführungsbeispiele näher erläutert. Es zeigen:
- Fig. 1 -: schematisch eine Telekommunikations-Infrastruktur, auf der das erfindungsgemäße Verfahren durchführbar ist;
- Fig. 2 -: schematisch eine alternative Telekommunikations-Infrastruktur;
- Fig. 3 -: eine schematische Darstellung eines erfindungsgemäßen Least Cost Routers und
- Fig. 4 -: ein Ablaufdiagramm des erfindungsgemäßen Verfahrens;

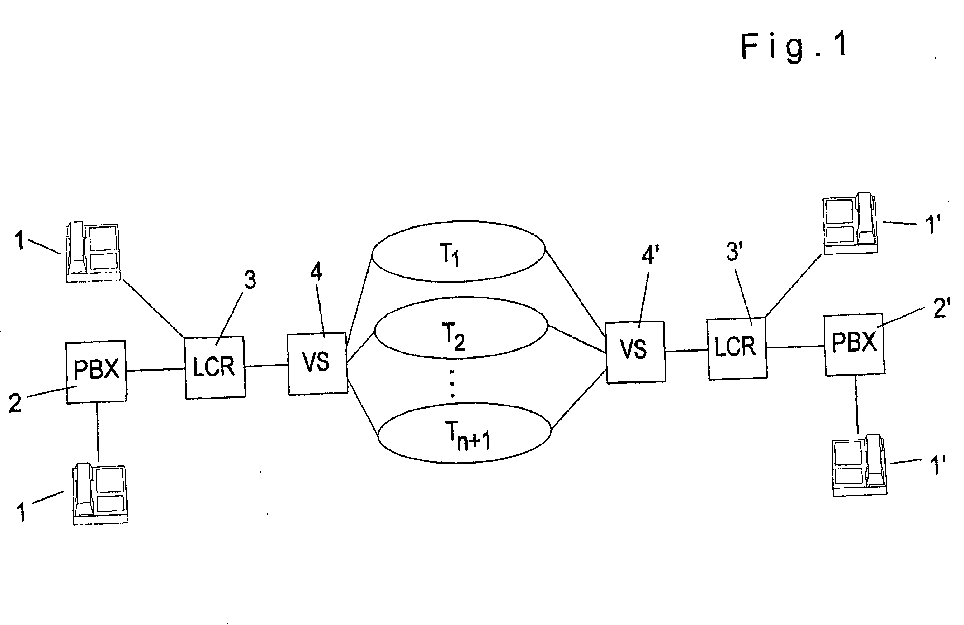

In der Anordnung der Figur 1 ist eine Telekommunikationseinheit (TK-Einheit), im dargestellten Beispiel ein Telefon 1, entweder direkt oder über eine Telekommunikationsanlage PBX 2 an einen Least Cost Router (LCR) 3 angschlossen. Der Least Cost Router 3 ist zwischen der TK-Einheit 1 bzw. der TK-Anlage 2 und einer Ortsvermittlungsstelle 4 angeordnet, das heißt auf der "letzten Meile" zwischen Ortsvermittlungsstelle 4 und TK-Einheit 1.

Die Ortsvermittlungsstelle 4 besitzt Zugang zu bzw. ist Teil einer Mehrzahl von Telekommunikationsnetzen T₁ ... Tₘ₊₁ Bei den Telekommunikationsnetzen Tᵢ handelt es sich um leitungsvermittelte Netze, die für eine Telekommunikationsverbindung digitale oder analoge Nutzkanalverbindungen durchschalten. Insbesondere handelt es sich um digitale Telekommunikationsnetze, die einen Verbindungsaufbau und eine Durchschaltung von Datenkanälen entsprechend dem Standard ISDN erlauben.

Empfängerseitig schließen sich an die Telekommunikationsnetze Tᵢ wiederum eine Vermittlungsstelle 4', ein Least Cost Router 3' sowie empfängerseitige TK-Einheiten 1' an, die entweder direkt oder über eine TK-Anlage 2' an den Least Cost Router 3' angeschlossen sind.

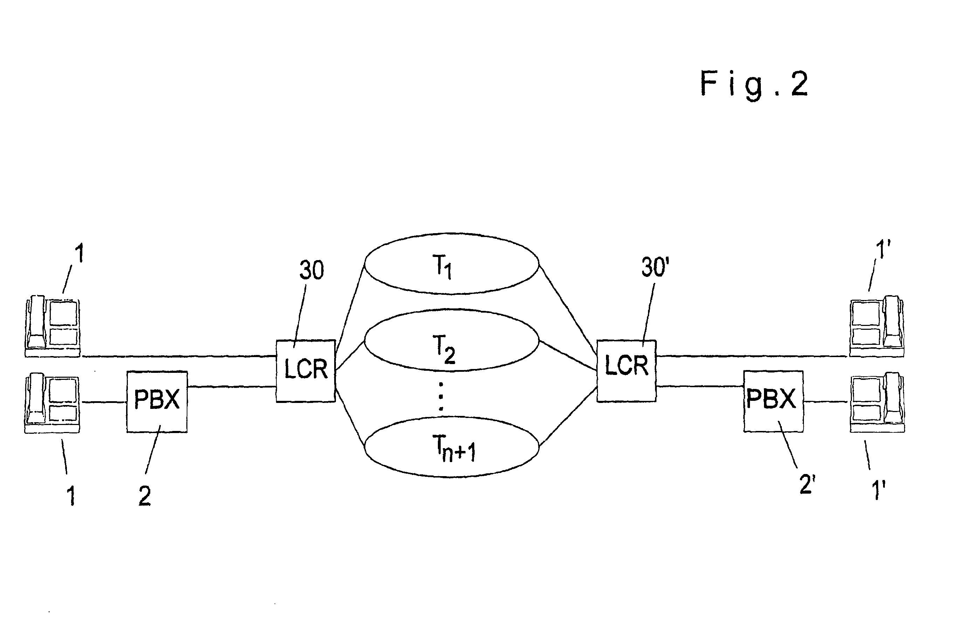

Figur 2 zeigt eine alternative Anordnung von Telekommunikationseinheiten und Telekommunikationsnetzen, die ebenfalls die Durchführung des nachfolgend beschriebenen erfindungsgemäßen Verfahrens ermöglichen. Im Gegensatz zu Figur 1 ist die TK-Einheit 1 (wiederum entweder direkt oder über eine TK-Anlage 2) an einen Least Cost Router 30 angeschlossen, der zusätzlich zu der Funktion der Auswahl eines kostengünstigen Telekommunikationsnetzes bzw. Telekommunikationsanbieters die Aufgaben eines Switches wahrnimmt, das heißt die Durchschaltung von Nutzkanalverbindungen und die Abwicklung der zugehörigen Signalisierungsfunktionen vornimmt.

Der Least Cost Router 30 ist dabei netzseitig angeordnet und anders als bei der Anordnung der Figur 1 der der TK-Einheit 1 zugeordneten Ortsvermittlungsstelle (nicht dargestellt) nachgeschaltet oder in diese integriert. Beispielsweise gehört der Least Cost Router 30 einem sogenannten "Minute Seller", der TK-Verbindungen kostengünstig anbietet. Die Anwahl des Least Cost Routers 30 erfolgt beispielsweise über eine bestimmte Vorwahl, die der eigentlichen Rufnummer eines gerufenen Teilnehmers vorangestellt wird. Dies kann an der TK-Einheit 1 entweder automatisch oder durch entsprechendes Wählen erfolgen.

Der Least Cost Router 30 besitzt wiederum Zugang zu einer Mehrzahl von Telekommunikationsnetzen T₁ ... Tₙ₊₁ bzw. ist Teil dieser Netze. Empfängerseitig sind in gleicher Weise wie in Fig. 1 ein Least Cost Router 30', TK-Einheiten 1' und gegebenenfalls eine TK-Anlage 2' vorgesehen.

Die in den beiden Figuren 1 und 2 dargestellten Anordnungen eines Least Cost Routers sind nur beispielhaft zu verstehen. Es können auch Kombinationen dieser beiden Anordnungen verwendet werden. Weiter kann unter Umständen auf einen empfängerseitigen Least Cost Router 3', 30' verzichtet werden. Für diesen Fall ist allerdings sicherzustellen, daß die der TK-Einheit 1' zugeordnete Ortsvermittlungsstelle in geeigneter Weise Signalisierungsbefehle vom Least Cost Router 3, 30 erhält, wie noch erläutert werden wird.

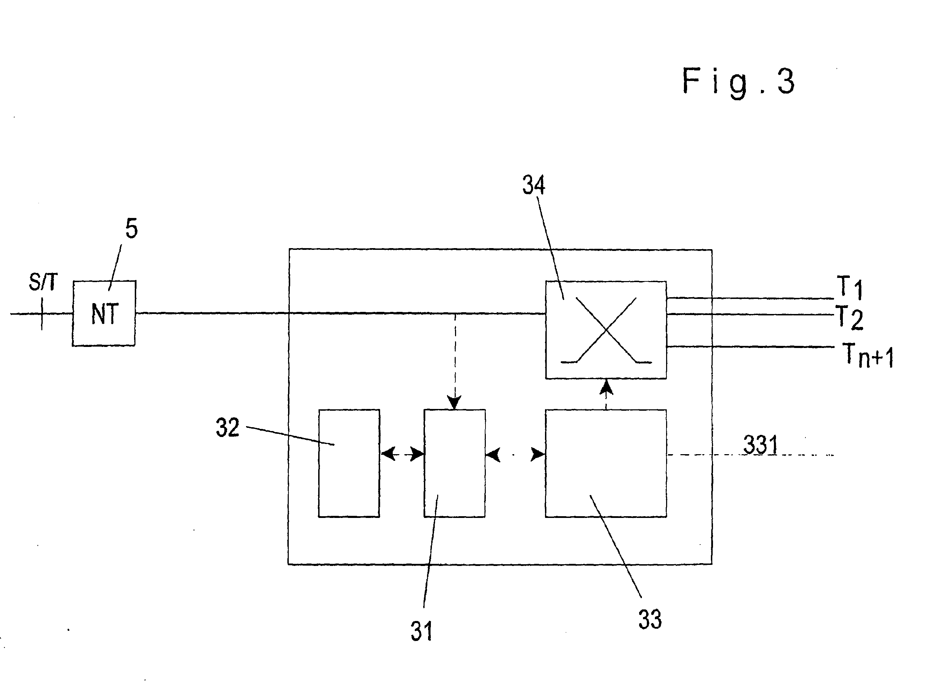

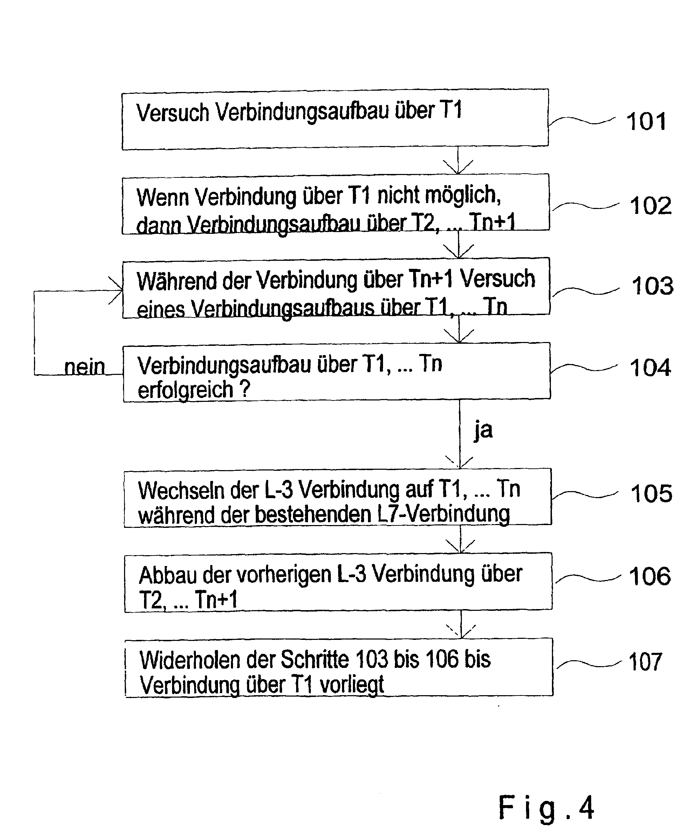

Bei der nachfolgenden Beschreibung eines Least Cost Routers in Figur 3 und des erfindungsgemäßen Verfahrens in Figur 4 wird angenommen, daß von der TK-Einheit 1 zu der TK-Einheit 1' eine L7-Verbindung aufgebaut werden soll. Es wird daher die Terminologie "rufendes Endgerät 1" und "gerufenes Endgerät 1"' verwendet.

Figur 3 zeigt einen erfindungsgemäßen Router 3, 3', 30, 30'. Er weist als funktionelle Einheiten eine Steuereinheit 31, einen Datenspeicher 32, eine Signalisierungseinheit 33 und als Line-Switching-Einrichtung ein Koppelfeld 34 auf. Der Datenspeicher 32 enthält Routing-Tabellen mit Parametern zu einer Mehrzahl von Telekommunikationsnetzen Tᵢ. Die Parameter betreffen die Gebühren verschiedener Telekommunikationsnetze in Abhängigkeit von der Tageszeit und dem Zielort eines Rufes sowie gegebenenfalls weiterer Preisinformationen, wie Rabatten etc.

Die Steuereinheit 31 bestimmt für einen bestimmten Verbindungswunsch des rufenden Endgerätes 1 auf der Grundlage der Routing-Tabellen, welches zur Verfügung stehende Telekommunikationsnetz die kostengünstigste Verbindung zum gerufenen Endgerät 1' ermöglicht. Für den Fall, daß ein Verbindungsaufbau über das günstigste Telekommunikationsnetz T₁ nicht möglich ist, werden weitere Telekommunikationsnetze T₂ ... Tₙ₊₁ bestimmt, mit absteigender Präferenz.

Die Signalisierungseinheit 33 dient der Abwicklung von Signalisierungsfunktionen zur Rufsteuerung und zum Verbindungsaufbau. Sie sendet hierzu u.a. Steuersignale an das Koppelfeld 34, das der Durchschaltung von Nutzkanalverbindungen dient.

Das vorliegende Ausführungsbeispiel geht davon aus, daß es sich bei den Endgeräten um ISDN-Geräte handelt und dementsprechend digitale Datenkanäle (B-Kanäle) vom Koppelfeld 34 durchgeschaltet werden. Die Erfindung ist jedoch nicht auf digitale Nutzkanalverbindungen oder den Standard ISDN beschränkt.

Das Koppelnetz 34 weist eine Eingangsleitung auf, die beispielsweise von einer Netzabschlußeinheit NT 5 ausgeht, an die das rufende Endgerät 1 über eine S/T-Schnittstelle angeschlossen ist. An das Koppelnetz können zahlreiche weitere Eingangsleitungen von anderen Netzabschlußeinheiten, TK-Anlagen etc. angeschlossen sein, die der Einfachheit halber jedoch nicht dargestellt sind. Ausgangsseitig weist das Koppelfeld 34 zahlreiche Ausgangsleitungen auf, über die Verbindungen zu einem gerufenen Endgerät 1' über verschiedene Telekommunikationsnetze T₁ ... Tₙ₊₁ gemäß den Figuren 1 und 2 hergestellt werden können.

Auf der Eingangsleitung des Koppelnetzes 34 sind beispielsweise zwei Nutzdaten-Basiskanäle (B-Kanäle) und ein Signalisierungskanal (D-Kanal) gemäß dem ISDN-Standard verwirklicht. Die Signalisierungsinformationen des D-Kanals werden über die gestrichelte Verbindung zur Steuereinheit 31 und von dieser weiter an die Signalisierungseinheit 33 geleitet. Allgemein sind Verbindungen zur Signalisierung/Steuerung in Figur 3 gestrichelt dargestellt, während die durchzuschaltenden Datenkanäle (B-Kanäle) durchgezogen gezeichnet sind.

Die Signalisierungseinheit 33 tauscht Signalisierungsinformationen mit dem gerufenen Endgerät 1' bzw. diesem vorgelagerten TK-Anlagen, Ortsvermittlungsstellen und Switches über einen Signalisierungskanal 331 aus. Wenn der Least Cost Router gemäß Figur 1 endgeräteseitig vor der Ortsvermittlungsstelle angeordnet ist, so handelt es sich bei dem Signalisierungskanal um den ISDN-D-Kanal, mittels dem Signalisierungsinformationen zur Ortsvermittlungsstelle gesandt werden. Wenn der Least Cost Router gemäß Figur 2 in einem Telekommunikationsnetz angeordnet ist, handelt es sich bei dem Signalisierungskanal 331 beispielsweise um einen Zentral-Signalisierungskanal entsprechend dem Signalisierungssystem Nr. 7, das als Standard zwischen ISDN-Vermittlungsstellen verwendet wird.

Es wird darauf hingewiesen, daß eine Signalisierung zwischen der Signalisierungseinheit 33 und dem gerufenen Endgerät 1' bzw. diesem vorgelagerten TK-Anlagen, Ortsvermittlungsstellen und Switches auch als Inband-Signalisierung erfolgen kann. Die Signalisierungseinheit 33 gibt die Signalisierungsinformation dann auf die entsprechenden Datenkanäle des Koppelnetzes 34.

Bei Anordnung des Least Cost Routers vor der Ortsvermittlungsstelle gemäß Figur 1 ist das Koppelfeld 34 in der einfachsten Version lediglich eine Switch-Matrix, die zwei eingangsseitige B-Kanäle auf zwei ausgangsseitige B-Kanäle durchschalten bzw. switchen kann. Zwei B-Kanäle stehen jedem ISDN-Basisanschluß zur Verfügung. Bei Verwendung des Least Cost Routers als in einem Telekommunikationsnetz angeordnetem Router gemäß Figur 2 ist das Koppelfeld dagegen mit einer Vielzahl von Eingangsleitungen und Ausgangsleitungen versehen, und werden eine Vielzahl von Nutz-Kanalverbindungen durchgeschaltet.

Bei einem Verbindungswunsch sendet das rufende Endgerät 1 über die Netzabschlußeinheit 5 standardgemäß ein Setup-Protokoll-Datenelement aus. Die Steuereinheit 31 wertet dieses Setup-Protokoll-Datenelement aus und bestimmt anhand der in dem Datenspeicher 32 gespeicherten Routing-Tabellen für den vorliegenden Verbindungswunsch das kostengünstigste Telekommunikationsnetz T₁. Zusätzlich werden Telekommunikationsnetze T₂, ... Tₙ₊₁ mit absteigender Präferenz, das heißt zunehmenden Kosten für die gewünschte Verbindung, bestimmt.

Anhand der Figur 4 wird das erfindungsgemäße Verfahren im einzelnen erläutert. Nach Auswahl von Telekommunikationsnetzen mit einer bestimmten Präferenz für den vorliegenden Verbindungswunsch durch die Steuereinheit 31 versucht die Signalisierungseinheit 33 zunächst, eine Verbindung zum gerufenen Endgerät über das Telekommunikationsnetz T₁ höchster Präferenz (d.g. das kostengünstigste Telekommunikationsnetz) aufzubauen (Schritt 101).

Es ist jedoch möglich, daß ein Verbindungsaufbau erfolglos ist, etwa wegen Überlastung des Netzes T₁. Die Signalisierungseinheit 33 versucht dann einen Verbindungsaufbau zum gerufenen Endgerät 1' über das zweitgünstigste Netz T₂ etc., bis ein Verbindungsaufbau gelingt eine Verbindung über ein Netz Tₙ₊₁, n ≥ 1 aufgebaut ist (Schritt 102).

Zum Aufbau der Verbindung werden von der Signalisierungseinheit 33 Steuersignale an das Koppelfeld 34 gesandt zwecks einer Durchschaltung der Verbindung vom rufenden Endgerät zum gerufenen Endgerät über das Netz Tₙ₊₁·

Erfindungsgemäß versucht die Signalisierungseinheit 33 während der bestehenden L7-Verbindung zwischen dem rufenden Endgerät und dem gerufenen Endgerät, eine Verbindung über ein alternatives Telekommunikationsnetz höherer Präferenz aufzubauen. Hierzu wird wiederum zunächst versucht, eine Verbindung über das günstigste Netz T₁ aufzubauen, wenn dies nicht möglich ist, über das Netz T₂, etc., bis zum nächstbesseren Netz Tₙ (Schritt 103). In einer Variante der Erfindung wird ausschließlich versucht, eine alternative Verbindung über das Telekommunikationsnetz T₁ aufzubauen.

Wenn ein Verbindungsaufbau über ein Telekommunikationsnetz Tₙ höherer Präferenz möglich ist (Schritt 104), so wird während der bestehenden L7-Verbindung zwischen dem rufenden Endgerät und dem gerufenen Endgerät das für die L3-Datenübertragung verwendete Telekommunikationsnetz gewechselt. Hierzu gibt die Signalisierungseinheit 33 einen entsprechenden Steuerbefehl an das Koppelnetz 34, das die Verbindung daraufhin über eine andere Ausgangsleitung und über das nun gewählte Telekommunikationsnetz Tₙ durchschaltet (Schritt 105). Die bisherige L-3 Verbindung über das Telekommunikationsnetz niedrigerer Präferenz wird nach dem Wechsel abgebaut, damit über dieses Netz keine Kosten mehr anfallen (Schhritt 106).

Sofern die nun vorliegende L3-Verbindung noch nicht über das günstigste Telekommunikationsnetz T₁ erfolgt, werden die Schritte 103 bis 106 wiederholt, bis eine L3-Verbindung über das Telekommunikationsnetz T₁ vorliegt (Schritt 107).

Es wird darauf hingewiesen, daß ein Wechsel des Telekommunikationsnetzes auch durch einen Wechsel der Präferenzen ausgelöst werden kann. Beispielsweise bietet ein TK-Anbieter während der ersten Minute einer Verbindung einen besonders-preisgünstigen Tarif an. Das entsprechende Telekommunikationsnetz ist dann das Netz höchster Präferenz. Nach Ablauf einer Minute erhöhen sich die Gebühren dieses Netzes, so daß nun ein anderes Netz die höchste Präferenz besitzt. Die Steuereinheit 31 sendet dann nach Ablauf der Minute oder kurz vorher Steuerbefehle an die Signalisierungseinheit 33, eine alternative Verbindung über das neue Netz nun höchster Präferenz vorzunehmen.

Ein anderes Beispiel für einen Wechsel der Präferenzen ist eine Änderung der Gebühren aufgrund eines Zeitzonenwechsels. Beispielsweise ändern sich üblicherweise um 18 Uhr die Gebühren der einzelnen Telekommunikationsnetze, so daß möglicherweise nach 18 Uhr ein anderes Netz das preisgünstigste ist als vor 18 Uhr.

Bei Anordnung des Least Cost Routers 3 gemäß Figur 1 wird in der einfachsten Variante der Erfindung bei einem Wechsel des Telekommunikationsnetzes die zu übertragene Information jeweils auf den anderen B-Kanal der zwei zur Verfügung stehenden B-Kanäle geschaltet.

Empfängerseitig werden die übertragenen Daten, die von dem jeweils ausgewählten Telekommunikationsnetz empfangen werden, über die Vermittlungsstelle, ggf. einen weiteren Least Cost Router und ggf. eine TK-Anlage an das gerufene Endgerät 1' übertragen. Dabei ist es wichtig, daß der dem gerufenen Endgerät vorgelagerte Switch, die vorgelagerte Vermittlungsstelle oder ein vorgelagerter weiterer Least Cost Router erkennen, daß die nun über das andere Telekommunikationsnetz Tₙ ankommenden Daten die gleiche L7-Verbindung betreffen wie die über das vorherige Telekommunikationsnetz Tₙ₊₁ übersandten Daten, d.h. die gleiche Verbindung zwischen rufendem Endgerät 1 und gerufenem Endgerät 1'.

Durch diese Zuordnung wird verhindert, daß die Vermittlungsstelle, der Switch oder der Least Cost Router die Verbindung zum gerufenen Endgerät 1' der Signalisierungseinheit 33 als besetzt anzeigen, so daß keine Datenübertragung über das neue Netz erfolgen kann. Diese Zuordnung erfolgt durch geeignete Signalisierungsinformationen, die von der Signalisierungseinheit 33 abgesandt werden. Diese Signalisierungsinformationen enthalten insbesondere die Absenderinformation des rufenden Endgerätes, insbesondere den Parameter "Calling Party Number". Anhand der identischen Absenderinformation erkennt der dem gerufenen Endgerät 1' vorgelagerte Least Cost Router, Switch etc., daß es sich um die gleiche L7-Verbindung handelt. Es wird dann die L3-Verbindung über das neue Telekommunikationsnetz Tₙ zur gerufenen Endeinrichtung 1' weitergeleitet bzw. durchgeschaltet und die bisherige L3-Verbindung niedrigerer Präferenz abgebaut.

Die betreffenden, von der Signalisierungseinheit 33 ausgesandten Signalisierungsinformationen können auf den Signalisierungskanal 331 übersandt werden. Genauso gut ist es jedoch möglich, diese Signalisierungsignale als Inband-Signal auf einem Datenkanal (B-Kanal) zu übersenden.

Das Koppelfeld 34 schaltet entsprechend des Steuerbefehlen des Signalisierungseinheit 33 stets die Verbindung zur gerufenen TK-Einheit 1' über das Telekommunikationsnetz mit der höchsten zur Verfügung stehenden Präferenz durch.

## Patentansprüche

1. Verfahren zur Übertragung von Informationen zwischen einer rufenden TK-Einheit und einer gerufenen TK-Einheit über ein leitungsvermitteltes Telekommunikationsnetz, das ein Router mit einer bestimmten Präferenz unter Berücksichtigung mindestens eines Netzparameters aus einer Mehrzahl zur Verfügung stehender leitungsvermittelter Telekommunikationsnetze auswählt, mit folgenden Schritten:
a) Versuch eines OSI Ebene 7, L7 Verbindungsaufbaus von der rufenden TK-Einheit zur gerufenen TK-Einheit über ein erstes leitungsvermitteltes Telekommunikationsnetz (T₁) höchster Präferenz, wobei der L7-Verbindungsaufbau einen OSI Ebene 3, L3 Verbindungsaufbau umfasst,
b) sofern ein L3-Verbindungsaufbau scheitert, Wiederholung des Versuchs eines L3-Verbindungsaufbaus über ein leitungsvermitteltes Telekommunikationsnetz (Tₙ₊₁, n>=1) niedrigerer Präferenz, solange, bis eine L3-Verbindung zum gerufenen Endgerät hergestellt ist,
c) Übertragen der Informationen zwischen den TK-Einheiten über die aufgebaute L3-Verbindung;
d) gegebenenfalls Wechsel der Präferenzen der leitungsvermittelten Telekommunikationsnetze während der L7-Verbindung;
**gekennzeichnet durch**
e) sofern die L3-Verbindung nicht über das Telekommunikationsnetz (T₁) höchster Präferenz vorliegt, Versuch eines L3-Verbindungsaufbaus zur gerufenen TK-Einheit über ein leitungsvernnitteltes Telekommunikationsnetz (T₁, T₂, ..., Tₙ) höherer Präferenz während der bestehenden L3-Verbindung zur gerufenen TK-Einheit über das Telekommunikationsnetz niedrigerer Präferenz (Tₙ₊₁),
f) sofern ein L3-Verbindungsaufbau über das Telekommunikationsnetz höherer Präferenz (T₁, T₂, ..., Tₙ) möglich ist, Wechseln auf das entsprechende Telekommunikationsnetz während der bestehenden L7-Verbindung zwischen der rufenden und der gerufenen TK-Einheit und
g) Wiederholen der Schritte e) und f), bis eine Informationsübertragung über das leitungsvermittelte Telekommuniktionsnetz höchster Präferenz (T₁) erfolgt oder die L7-Verbindung beendet wird.

2. Verfahren nach Anspruch 1, bei dem nach Vorliegen der L3-Verbindung über das leitungsvermittelte Telekommunikationsnetz niedrigerer Präferenz (Tₙ₊₁) der Versuch eines L3-Verbindungsaufbaus zur gerufenen TK-Einheit stets über das leitungsvermittelte Telekommunikationsnetz T₁ höchster Präferenz erfolgt.

3. Verfahren nach Anspruch 1 oder 2, bei dem für die Übertragung von Informationen zwischen der rufenden TK-Einheit und der gerufenen TK-Einheit mindestens zwei Datenkanäle zur Verfügung stehen, wobei die Informationen nach Aufbau der L3-Verbindung über das Telekommunikationsnetz niedrigerer Präferenz (Tₙ₊₁) über einen ersten der Datenkanäle und nach Wechsel auf das Telekommunikationsnetz höherer Präferenz (T₁, T₂, ...,Tₙ) über einen anderen der Datenkanäle übertragen werden.

4. Verfahren nach Anspruch 3, bei dem zur Datenübertragung zwischen den TK-Einheiten mindestens zwei B-Kanäle gemäß dem ISDN-Standard zur Verfügung stehen und bei einem Wechsel auf ein anderes Telekommunikationsnetz (T₁, T₂, ..., Tₙ) die Daten über einen anderen B-Kanal übertragen werden.

5. Verfahren nach mindestens einem der vorangehenden Ansprüche, bei dem einer Vermittlungsstelle, einem Switch oder einem weiteren Router, die der gerufenen TK-Einheit vorgelagert sind, vom Router der rufenden TK-Einheit Signalisierungsbefehle übersandt werden betreffend einen Wechsel der L3-Verbindung bzw. des Telekommunikationsnetzes, und die Vermittlungsstelle, der Switch bzw. der weitere Router daraufhin die L3-Verbindung über das neue Telekommunikationsnetz (T₁, T₂ ,..., Tₙ) der L3-Verbindung über das bisherige Telekommunikationsnetz (Tₙ₊₁) zuordnen und nur erstere zur gerufenen TK-Einheit weiterleiten.

6. Verfahren nach Anspruch 5, bei dem die Zuordnung der L3-Verbindungen über die Absenderinformation der rufenden TK-Einheit erfolgt.

7. Verfahren nach Anspruch 5 oder 6, bei dem die Signalisierung vom Router der rufenden TK-Einheit zu der Vermittlungsstelle, dem Switch oder dem weiteren Router als Inband-Signalisierung erfolgt.

8. Verfahren nach mindestens einem der vorangehenden Ansprüche, bei dem eine L7-Verbindung von der rufenden TK-Einheit zur gerufenen TK-Einheit über ein Telekommunikationsnetz (T₁) höchster Präferenz vorliegt, sich die Präferenz während der Verbindung ändert, und daraufhin ein L3-Verbindungsaufbau zur gerufenen TK-Einheit über ein leitungsvermitteltes Telekommunikationsnetz nun höherer Präferenz versucht wird und ggf. ein Wechsel zum leitungsvermittelten Telekommunikationsnetz nun höherer Präferenz während der bestehenden L7-Verbindung erfolgt.

9. Verfahren nach mindestens einem der vorangehenden Ansprüche, bei dem nach einem Wechsel des Telekommunikationsnetzes die bisherige L3-Verbindung über das Telekommunikationsnetz niedrigerer Präferenz (Tₙ₊₁) abgebaut wird.

10. Verfahren nach mindestens einem der vorangehenden Ansprüche, bei dem der oder die Parameter, deren Bewertung zu der Auswahl eines Telekommunikationsnetzes mit einer bestimmten Präferenz führt, die Kosten und/oder die Bandbreite einer Verbindung zur gerufenen TK-Einheit sind.

11. Router zur Durchführung des Verfahrens nach Anspruch 1, mit
a) Speichermitteln (32), die Routing-Tabellen mit Parametern zu einer Mehrzahl von leitungsvermittelten Telekommunikationsnetzen enthalten.
b) einer Steuereinheit (31), die auf der Grundlage der Routing-Tabellen leitungsvermittelte Telekommunikationsnetze mit einer bestimmten Präferenz auswählt und Steuerbefehle generiert,
**gekennzeichnet durch**
c) eine Signalisierungseinheit (33) zum Verbindungsaufbau, die entsprechend den Steuerbefehlen der Steuereinheit (31) versucht, eine OSI Eben 3, L3, Verbindung zu einer gerufenen TK-Einheit über ein Telekommunikationsnetz (T₁, T₂, ..., Tₙ) hoher Präferenz aufzubauen, während zu der gleichen TK-Einheit bereits eine L3-Verbindung über ein Telekommunikationsnetz (Tₙ₊₁) niedrigerer Präferenz besteht, und dies während einer bestehenden OSI Ebene 7, L7, Verbindung zu der gerufenen TK-Einheit,
d) eine Line-Switching-Einrichtung (34) zum Durchschalten von Datenkanälen, die eine L3-Verbindung zur gerufenen TK-Einheit über das Telekommunikationsnetz mit der höchsten zur Verfügung stehenden Präferenz durchschaltet.

12. Router nach Anspruch 11, wobei die Line-Switching-Einrichtung (34) die L3-Verbindung zu einer gerufenen TK-Einheit zunächst auf einem ersten Datenkanal über ein erstes leitungsvermitteltes Telekommunikationsnetz und bei Vorliegen eines entsprechenden Steuerbefehls der Steuereinheit auf einem zweiten Datenkanal über ein zweites leitungsvermitteltes Telekommunikationsnetz höherer Präferenz durchschaltet.

13. Router nach Anspruch 11 oder 12, wobei die Steuereinheit (31) und/oder die Signalisierungseinheit (33) Zuordnungsmittel aufweisen, die über unterschiedliche leitungsvermittelte Telekommunikationsnetze zu derselben gerufenen TK-Einheit durchgeschaltete bzw. durchzuschaltende Datenkanäle derselben L7-Verbindung zuordnen.

14. Router nach mindestens einem der Ansprüche 11 bis 13, wobei die Steuereinheit (31) und die Signalisierungseinheit (33) als eine Einheit ausgebildet sind.

15. Router nach mindestens einem der Ansprüche 11 bis 14, wobei der Router (30, 30') in einen Switch eines leitungsvermittelten Telekommunikationsnetzes integriert ist.

16. Router nach mindestens einem der Ansprüche 11 bis 14, wobei der Router (3, 3') in ein TK-Endgerät, insbesondere ein Telefon, oder eine Telekommunikationsanlage integriert ist.

17. Anordnung zur Durchführung des Verfahrens nach Anspruch 1 mit einem Router nach Anspruch 11, bei der der Router (3, 3') zwischen der rufenden TK-Einheit (1) und einer Ortsvermittlungsstelle (4, 4'), die Zugang zu einer Mehrzahl von Telekommunikationsnetzen besitzt bzw. Teil dieser Netze ist, angeordnet ist.

18. Anordnung zur Durchführung des Verfahrens nach Anspruch 1 mit einem Router nach Anspruch 11, bei der der Router (30, 30') der der rufenden TK-Einheit (1) zugeordneten Ortsvermittlungsstelle nachgeschaltet oder in diese integriert und Teil eines leitungsvermittelten Telekommunikationsnetzes ist.

## Claims

1. Method for transmission of information between a calling telecommunications unit and a called telecommunications unit via a line-switching telecommunications network, which is selected by a router with a specific preference taking account of at least one network parameter from a plurality of available line-switching telecommunications networks, having the following steps:
a) attempt to set up an OSI Level 7 L7 connection from the calling telecommunications unit to the called telecommunications unit via a first line-switching telecommunications network (T₁) with the highest preference, with the process of setting up an L7 connection including the setting up of an OSI Level 3 L3 connection,
b) if the process of setting up an L3 connection fails, repetition of the attempt to set up an L3 connection via a line-switching telecommunications network (Tₙ₊₁, n>=1) with a lower preference until an L3 connection is set up to the called terminal,
c) transmission of the information between the telecommunications units via the L3 connection that has been set up,
d) if appropriate, change to the preferences in the line-switching telecommunications network during the L7 connection;
**characterized by**
e) if the L3 connection is not via the telecommunications network (T₁) having the highest preference, attempt to set up an L3 connection to the called telecommunications unit via a line-switching telecommunications network (T₁, T₂, ..., Tₙ) of higher preference during the existing L3 connection to the called telecommunications unit via the telecommunications network of lower preference (Tₙ₊₁),
f) if it is possible to set up an L3 connection via the telecommunications network of higher preference (T₁, T₂, ... , Tₙ), change to the corresponding telecommunications network during the existing L7 connection between the calling and the called telecommunications unit, and
g) repetition of steps e) and f) until information transmission takes place via the line-switching telecommunications network with the highest preference (T₁), or the L7 connection is ended.

2. Method according to Claim 1, in which, once the L3 connection has been set up via the line-switching telecommunications network of lower preference (Tₙ₊₁), the attempt to set up an L3 connection to the called telecommunications unit always takes place via the line-switching telecommunications network T₁ with the highest preference.

3. Method according to Claim 1 or 2, in which at least two data channels are available for transmission of information between the calling telecommunications unit and the called telecommunications unit, with the information being transmitted after setting up the L3 connection via the telecommunications network of lower preference (Tₙ₊₁) via a first of the data channels, and being transmitted via another of the data channels after a change to the telecommunications network of higher preference (T₁ , T₂, ... , Tₙ) .

4. Method according to Claim 3, in which at least two B channels in accordance with the ISDN standard are available for data transmission between the telecommunications units, and the data is transmitted via a different B channel when a change takes place to a different telecommunications network (T₁, T₂, ..., Tₙ).

5. Method according to at least one of the preceding claims, in which signalling commands are transmitted to a switching centre, to a switch or to a further router, which are located upstream of the called telecommunications unit, from the router of the calling telecommunications unit, relating to a change in the L3 connection and/or the telecommunications network, and the switching centre, the switch or the further router respectively then associates the L3 connection via the new telecommunications network (T₁, T₂, ... , Tₙ) with the L3 connection via the previous telecommunications network (Tₙ₊₁) and passes on only the former to the called telecommunications unit.

6. Method according to Claim 5, in which the association with the L3 connections is carried out by means of the sender information from the calling telecommunications unit.

7. Method according to Claim 5 or 6, in which the signalling from the router of the calling telecommunications unit to the switching centre, the switch or the further router is in the form of in-band signalling.

8. Method according to at least one of the preceding claims, in which an L7 connection is set up from the calling telecommunications unit to the called telecommunications unit via a telecommunications network (T₁) with the highest preference, the preference is changed during the connection, and an attempt is then made to set up an L3 connection to the called telecommunications network unit via a line-switching telecommunications network whose preference is now higher and, if appropriate, a change is made to the line-switching telecommunications network which now has higher preference, during the existence of the L7 connection.

9. Method according to at least one of the preceding claims, in which, once a telecommunications network change has been made, the previous L3 connection via the telecommunications network with lower preference (Tₙ₊₁) is cleared.

10. Method according to at least one of the preceding claims, in which the parameter or parameters whose assessment leads to the selection of a telecommunications network with a specific preference is or are the costs and/or the bandwidth of a connection to the called telecommunications unit.

11. Router for carrying out the method according to Claim 1, having
a) storage means (32), which contain routing tables with parameters relating to a plurality of line-switching telecommunications networks,
b) a control unit (31), which selects line-switching telecommunications networks with a specific preference on the basis of the routing tables, and generates control commands,
**characterized by**
c) a signalling unit (33) for setting up connections, which attempts in accordance with the control commands from the control unit (31) to set up an OSI Level 3 L3 connection to a called telecommunications unit via a telecommunications network (T₁, T₂, ..., Tₙ) of high preference, while an L3 connection via a telecommunications network (Tₙ₊₁) of lower preference is already in existence to the same telecommunications unit, and does this while an OSI Level 7 L7 connection is in existence to the called telecommunications unit,
d) a line-switching device (34) for passing on data channels, which passes on an L3 connection to the called telecommunications unit via the telecommunications network with the highest available preference.

12. Router according to Claim 11, in which the line-switching device (34) passes on the L3 connection to a called telecommunications unit first of all on a first data channel via a first line-switching telecommunications network and, when an appropriate control command is present from the control unit, on a second data channel via a second line-switching telecommunications network with a higher preference.

13. Router according to Claim 11 or 12, in which the control unit (31) and/or the signalling unit (33) have/has allocation means, which allocate data channels which are passed on or can be passed on via different line-switching telecommunications networks to the same called telecommunications unit, to the same L7 connection.

14. Router according to at least one of Claims 11 to 13, in which the control unit (31) and the signalling unit (33) are in the form of one unit.

15. Router according to at least one of Claims 11 to 14, in which the router (30, 30') is integrated in a switch in a line-switching telecommunications network.

16. Router according to at least one of Claims 11 to 14, in which the router (3, 3') is integrated in a telecommunications terminal, in particular a telephone, or a telecommunications system.

17. Arrangement for carrying out the method according to Claim 1 having a router according to Claim 11, in which the router (3, 3') is arranged between the calling telecommunications unit (1) and a local switching centre (4, 4') which has access to a plurality of telecommunications networks, and/or is part of these networks.

18. Arrangement for carrying out the method according to Claim 1 having a router according to Claim 11, in which the router (30, 30') is downstream of the local switching centre which is assigned to the calling telecommunications unit (1) is connected, or is integrated in this local switching centre and is part of a line-switching telecommunications network.

## Revendications

1. Procédé pour la transmission d'informations entre une unité TC appelant et une unité TC appelée par un réseau de télécommunication à circuits commutés, qui est sélectionne un routeur avec une certaine préférence en prenant compte au moins un paramètre de réseau à partir d'un pluralité de réseaux de télécommunication disponibles à circuits commutés, avec les étapes suivantes :
a) tentative d'établir une liaison OSI niveau 7 de l'unité TC appelant vers l'unité TC appelée par un premier réseau de télécommunication à circuits commutés (T₁) à la préférence la plus élevée, sachant que l'établissement de la liaison OSI niveau 7 comprend un établissement de liaison OSI niveau 3,
b) tant qu'un établissement de liaison OSI niveau 3 échoue, répétition de la tentative d'un établissement de liaison OSI niveau 3 par un réseau de télécommunication à circuits commutés (Tₙ₊₁, n>=1) de préférence inférieure, jusqu'à ce qu'une liaison OSI niveau 3 soit établie vers l'appareil terminal appelé,
c) transmission des informations entre les unités TC par la liaison OSI niveau 3 établie ;
d) éventuellement changement des préférences des réseaux de télécommunication à circuits commutés pendant la liaison OSI niveau 7;
**caractérisé par**
e) tant que la liaison OSI niveau 3 n'est pas sur le réseau de télécommunication (T₁) à la préférence la plus élevée, tentative d'un établissement de liaison OSI niveau 3 vers l'unité TC appelée par un réseau de télécommunication à circuits commutés (T₁, T₂, ... Tₙ) à préférence plus élevée pendant la liaison OSI niveau 3 existante vers l'unité TC appelée par le réseau de télécommunication à préférence inférieure (Tₙ₊₁),
f) tant qu'un établissement de liaison OSI niveau 3 par le réseau de télécommunication à préférence plus élevée (T₁, T₂,...Tₙ) est possible, changement vers le réseau de télécommunication correspondant pendant la liaison OSI niveau 7 existante entre l'unité TC appelant et l'unité TC appelée et
g) répétition des étapes e) et f) jusqu'à ce qu'une transmission d'informations s'effectue par le réseau de télécommunication à circuits commutés à préférence la plus élevée (T₁) ou que la liaison OSI niveau 7 soit terminée.

2. Procédé selon la revendication 1, dans lequel, après existence de la liaison OSI niveau 3 par le réseau de télécommunication à circuits commutés à préférence inférieure (Tₙ₊₁) s'effectue la tentative d'un établissement de liaison OSI niveau 3 vers l'unité TC appelée continuellement par le réseau de télécommunication à circuits commutés T₁ à préférence la plus élevée.

3. Procédé selon la revendication 1 ou 2, dans lequel, pour la transmission d'informations entre l'unité TC appelant et l'unité TC appelée sont disponibles au moins deux canaux de données, sachant que les informations sont transmises, après établissement de la liaison OSI niveau 3 par le réseau de télécommunication à préférence inférieure (Tₙ₊₁), par un premier canal de données et, après changement vers le réseau de télécommunication à préférence plus élevée (T₁, T₂,...Tₙ), par un autre canal de données.

4. Procédé selon la revendication 3, dans lequel, pour la transmission des données entre les unités TC, au moins deux canaux B selon le standard RNIS sont disponibles et dans lequel, lors d'un changement vers un autre réseau de télécommunication (T₁, T₂, ... Tₙ), les données sont transmises par un autre canal B.

5. Procédé selon au moins l'une des revendications précédentes, dans lequel, à un centre de commutation, un commutateur ou un autre routeur, qui sont placés en amont de l'unité TC appelée, sont envoyés par le routeur de l'unité TC appelant des ordres de signalisation concernant un changement de liaison OSI niveau 3 ou de réseau de télécommunication, et le centre de commutation, le commutateur ou bien l'autre routeur affecte ensuite la liaison OSI niveau 3 par le nouveau réseau de télécommunication (T₁, T₂,...Tₙ) à la liaison OSI niveau 3 par le réseau de télécommunication antérieur (Tₙ₊₁) et continue de transmettre seulement la première vers l'unité TC appelée.

6. Procédé selon la revendication 5, dans lequel l'affectation des liaisons OSI niveau 3 s'effectue par l'information d'émetteur de l'unité TC appelant.

7. Procédé selon la revendication 5 ou 6, dans lequel la signalisation du routeur de l'unité TC appelée vers le centre de commutation, le commutateur ou l'autre routeur s'effectue comme signalisation intrabande.

8. Procédé selon au moins l'une quelconque des revendications précédentes, dans lequel une liaison OSI niveau 7 d'une unité TC appelant vers une unité TC appelée existe par un réseau de télécommunication (T₁) à préférence la plus élevée, dans lequel la préférence se modifie pendant la liaison et qu'ensuite un établissement de liaison OSI niveau 3 vers l'unité TC appelée est tenté par un réseau de télécommunication à circuits commutés à préférence alors plus élevée et éventuellement un changement pour un réseau de télécommunication à circuits commutés à préférence alors plus élevée s'effectue pendant la liaison OSI niveau 7 existante.

9. Procédé selon au moins l'une quelconque des revendications précédentes, dans lequel, après un changement du réseau de télécommunication, la liaison OSI niveau 3 antérieure par le réseau de télécommunication à préférence inférieure (Tₙ₊₁) est supprimée.

10. Procédé selon au moins l'une quelconque des revendications précédentes, dans lequel le ou les paramètre(s), dont l'évaluation conduit à la sélection d'un réseau de télécommunication avec une certaine préférence, sont les coûts et/ou la largeur de bande d'une liaison vers l'unité TC appelée.

11. Routeur pour la réalisation du procédé selon la revendication 1, avec
a) des moyens d'enregistrement (32), qui contiennent les tableaux de routage avec des paramètres vers une pluralité de réseaux de télécommunication à circuits commutés,
b) une unité de commande (31), qui sélectionne sur la base des tableaux de routage des réseaux de télécommunication à circuits commutés avec une certaine préférence et génère des ordres de commande, **caractérisé par**
c) une unité de signalisation (33) pour l'établissement d'une liaison, qui tente en fonction des ordres de commande de l'unité de commande (31) d'établir une liaison OSI niveau 3, vers une unité TC appelée par un réseau de télécommunication (T₁, T₂, ...Tₙ) à préférence élevée, alors que vers la même unité TC existe déjà une liaison OSI niveau 3 par un réseau de télécommunication (Tₙ₊₁) à préférence inférieure et ce, pendant une liaison OSI niveau 7 existante vers l'unité TC appelée,
d) un dispositif de commutation en ligne (34) pour commuter des canaux de données, lequel commute une liaison OSI niveau 3 vers l'unité TC appelée par le réseau de télécommunication avec la préférence disponible la plus élevée.

12. Routeur selon la revendication 11, dans lequel le dispositif de commutation en ligne (34) commute la liaison OSI niveau 3 vers une unité TC appelée d'abord sur un premier canal de données par un premier réseau de télécommunication à circuits commutés et, dans le cas d'un ordre de commande correspondant de l'unité de commande, sur un second canal de données par un second réseau de télécommunication à circuits commutés à préférence plus élevée.

13. Routeur selon la revendication 11 ou 12, dans lequel l'unité de commande (31) et/ou l'unité de signalisation (33) comportent des moyens d'affectation, qui affectent par différents réseaux de télécommunication à circuits commutés à la même unité TC appelée des canaux de données commutés ou à commuter de cette même liaison OSI niveau 7.

14. Routeur selon au moins l'une quelconque des revendications 11 à 13, dans lequel l'unité de commande (31) et l'unité de signalisation (33) sont conçues comme une unité.

15. Routeur selon au moins l'une quelconque des revendications 11 à 14, tel que ce routeur (30, 30') est intégré dans un commutateur d'un réseau de télécommunication à circuits commutés.

16. Routeur selon au moins l'une quelconque des revendications 11 à 14, tel que ce routeur (3, 3') est intégré dans un appareil terminal TC, en particulier un téléphone, ou une installation de télécommunication.

17. Installation pour la réalisation du procédé selon la revendication 1 avec un routeur selon la revendication 11, dans laquelle le routeur (3, 3') est disposé entre l'unité TC appelant (1) et un central local (4, 4'), qui possède un accès à une pluralité de réseaux de télécommunication ou bien qui est une partie de ces réseaux.

18. Installation pour la réalisation du procédé selon la revendication 1 avec un routeur selon la revendication 11, dans laquelle le routeur (30, 30') est placé en aval du central local affecté à l'unité TC appelant (1) ou est intégré dans ce central local et est une partie d'un réseau de télécommunication à circuits commutés.
